# EUROPÄISCHE PATENTSCHRIFT

(11) **EP 2 009 296 B1**
(45) Veröffentlichungstag und Bekanntmachung des Hinweises auf die Patenterteilung: **05.12.2012**
(21) Anmeldenummer: 08103959.6
(22) Anmeldetag: 14.05.2008
(51) Int. Cl.: F16B 13/14

(54) **Chemisch verankerbares Befestigungselement**
Chemically fixable fastening element
Elément de fixation ancrable chimiquement

(30) Priorität: 29.06.2007 DE 102007000360
(43) Veröffentlichungstag der Anmeldung: 31.12.2008
(73) Patentinhaber: HILTI Aktiengesellschaft, 9494 Schaan (LI)
(72) Erfinder: Gonzalez, Rosa Maria, 15404 Ferrol (ES); Hannoschoeck, Nikolaus, 9472, Grabs (CH); Sander, Bernhard, 81379, München (DE)
(74) Vertreter: Wildi, Roland

(56) Entgegenhaltungen:
- EP-A1- 0 763 665
- DE-B1- 1 500 891

## Beschreibung

Die Erfindung betrifft ein chemisch verankerbares Befestigungselement, das sich entlang einer Längsachse erstreckt, mit einem Halteabschnitt zur Kontaktierung der Wandung eines Bohrlochs, wobei der Halteabschnitt ein Lastangriffsmittel aufweist, mit einem an den Halteabschnitt anschliessenden Verbindungsabschnitt, der kleinere radiale Abmessungen als der Halteabschnitt aufweist, und mit einem an den Verbindungsabschnitt anschliessenden Verankerungsabschnitt, der kleinere radiale Abmessungen als der Halteabschnitt aufweist, mit einem gewindefurchenden Aussengewinde, das an dem Halteabschnitt vorgesehen ist.

Ein solches Befestigungselement ist aus der DE-B-1 500 891 bekannt.

Zur chemischen Verankerung eines Befestigungselementes, wie einer Ankerstange, einer Gewindestange, einer Gewindehülse, einem Schraubanker oder einem Bewehrungseisen, in einem Verankerungsgrund wird ein Bohrloch erstellt, dieses mit einer aushärtbaren Masse, z. B. einer zweikomponentigen Mörtelmasse, befüllt und das Befestigungselement in das befüllte Bohrloch gesetzt. Nach dem Aushärten der Masse weist das Befestigungselement hohe Lastwerte auf. Das Befestigungselement ist erst nach der vollständigen Aushärtung der aushärtbaren Masse belastbar.

Mechanische verankerte Befestigungselemente, wie z. B. Spreizdübel, sind zwar sofort belastbar, müssen jedoch aufgrund der im Untergrund auftretenden Spreizkräfte jeweils in entsprechend grossen Rand- und Achsabständen zueinander am Bauteil angeordnet werden.

Aus der EP 0 763 665 A1 ist ein sich entlang einer Längsachse erstreckendes Befestigungselement mit einem Halteabschnitt zur klemmenden Kontaktierung der Wandung eines Bohrlochs, der ein Lastangriffsmittel aufweist, mit einem an den Halteabschnitt anschliessenden Verbindungsabschnitt, der einen kleineren Durchmesser als der Halteabschnitt aufweist, und mit einem an den Verbindungsabschnitt anschliessenden Verankerungsabschnitt bekannt, der einen kleineren Durchmesser als der Halteabschnitt aufweist. Das Bohrloch wird mit einer aushärtbaren Masse befüllt und das Befestigungselement in das Bohrloch eingeschlagen, wobei der Halteabschnitt das Befestigungselement bis zum vollständigen Aushärten der aushärtbaren Masse klemmend im Bohrloch hält.

Nachteilig an der bekannten Lösung ist, dass durch die Klemmung im Bereich des Bohrlochmundes Spreizkräfte in den Untergrund geleitet werden, so dass auch bei diesem Befestigungselement grosse Rand- und Achsabstände zu berücksichtigen sind.

Aufgabe der Erfindung ist es, ein chemisch verankerbares, sofort belastbares Befestigungselement zu schaffen, das in geringen Rand- und Achsabständen setzbar ist.

Die Aufgabe ist durch die Merkmale der unabhängigen Ansprüche gelöst. Vorteilhafte Weiterbildungen sind in den Unteransprüchen dargelegt.

Gemäss der Erfindung ist an dem Halteabschnitt ein gewindefurchendes Aussengewinde gemäß den Merkmalen des Anspruchs 1 vorgesehen.

Beim Eintreiben des Befestigungselementes schneidet das Aussengewinde sich in die Wandung des Bohrlochs ein und schafft eine mechanische Verankerung des Befestigungselementes im Bereich des Halteabschnitts durch den wendelförmig verlaufenden Hinterschnitt im Untergrund. Diese mechanische Verankerung ist i. W. frei von Spreizdrücken, so dass die Anordnung des erfindungsgemässen Befestigungselementes in geringen Rand- und Achsabständen möglich ist. Das Befestigungselement ist sofort nach dem Setzen belastbar. Nach dem vollständigen Aushärten der aushärtbaren Masse weist das Befestigungselement das maximale Lastniveau auf.

Vorteilhaft ist das Lastangriffsmittel ein Gewindeanschluss, an dem der zu befestigende Gegenstand festgelegt wird. Besonders vorteilhaft ist das Lastangriffsmittel ein Innengewinde, so dass das Befestigungselement mit der Untergrundoberfläche bündig setzbar ist.

Vorteilhaft weist der Verbindungsabschnitt einen kreisförmigen Querschnitt mit einem Durchmesser auf, der etwa dem 0.3- bis 0.9-fachen des Aussendurchmessers des Halteabschnitts entspricht. Die axiale Länge des Verbindungsabschnitts ist derart gewählt, dass das bei Eintreiben des Befestigungselementes anfallende sowie im Bohrloch gegebenenfalls noch vorhandene Bohrklein und Bohrmehl in dem Zwischenraum zwischen der Aussenseite des Verbindungsabschnitts und der Wandung des Bohrlochs aufgenommen werden kann.

Vorteilhaft weist der Verankerungsabschnitt ebenfalls einen kreisförmigen Querschnitt mit einem Durchmesser auf, der maximal dem Nenndurchmesser des Bohrlochs entspricht und somit kleiner als der Aussendurchmesser des Halteabschnitts ist. Die axiale Länge des Verankerungsabschnitts entspricht vorteilhaft mindestens der Hälfte der kleinsten radialen Abmessung z. B. des Durchmessers des Verankerungsabschnitts. Weiter vorteilhaft ist die Aussenseite des Verankerungsabschnitts mit einer Profilierung, z. B. einem Gewinde, einer Rändelung, etc. versehen, welche den Verbund zwischen der ausgehärteten Masse und dem Befestigungselement im Bereich des Verankerungsabschnitts erhöht.

Die nach dem Setzen des Befestigungselementes eingebrachte aushärtbare Masse umhüllt das sofort auf ein bestimmtes Lastniveau belastbare Befestigungselement im Bereich des Verankerungsabschnitts und des Verbindungsabschnitts, wobei das Bohrklein im Bereich des Verbindungsabschnitts in der aushärtbaren Masse eingelagert wird.

Erfindungsgemäß entspricht die Steigung des Aussengewindes gegenüber der Längsachse des Befestigungselementes 30° bis 70°. Besonders vorteilhaft beträgt die Steigung gegenüber der Längsachse 35° bis 40°. Infolge der Ausbildung des Aussengewindes als Steilgewinde, ist nur eine geringe Schlagenergie zum schlagenden Setzen des Befestigungselementes erforderlich.

Erfindungsgemäß entspricht der Flankenwinkel zu einer senkrecht zur Längsachse des Befestigungselementes stehenden Ebene der dem freien Ende des Halteabschnitts zugewandten Flanke des Aussengewindes 82° bis 88°. Vorteilhaft entspricht der Flankenwinkel der rückwärtigen Flanke 84° bis 86°. Die flache rückwärtige beziehungsweise hintere Flanke schafft eine Selbsthemmung des in das Bohrloch eingetriebenen Befestigungselementes und verhindert ein selbstständiges Lösen der mechanischen Verankerung.

Erfindungsgemäß entspricht der Flankenwinkel zu der senkrecht zur Längsachse des Befestigungselementes stehenden Ebene der dem freien Ende des Halteabschnitts abgewandten Flanke des Aussengewindes 3° bis 10°. Vorteilhaft entspricht der Flankenwinkel dieser vorderen Flanke 4° bis 7°. Die steilere, vordere Flanke gewährleistet vorteilhaft das Furchen des gewindefurchenden Aussengewindes.

Vorzugsweise ist das Aussengewinde mehrgängig ausgebildet, was ein einfaches und ausgerichtetes Setzen des Befestigungselementes gewährleistet.

Bevorzugt ist zumindest ein Steigkanal für eine aushärtbare Masse an dem Halteabschnitt vorgesehen, in dem die aushärtbare Masse bis zum freien Ende des Halteabschnitts aufsteigen kann und so dem Anwender die vollständige Verfüllung des Bohrlochs zuverlässig anzeigt. Weiter verhindert der Steigkanal weitgehend Lufteinschlüsse in der ausgehärteten Masse, welche sich nachteilig auf das Tragverhalten des gesetzten Befestigungselementes auswirken können. Vorteilhaft ist der Steigkanal eine Nut, die als eine Vertiefung an der Aussenseite des Halteabschnitts angeordnet ist. In einer alternativen Ausführungsform verläuft der Steigkanal im Inneren des Halteabschnitts und mündet an dessen freiem Ende.

Vorzugsweise weist das Befestigungselement eine zur Längsachse verlaufende Einfüllbohrung für die aushärtbare Masse zur Befüllung des Bohrlochs auf, die sich ausgehend von dem Halteabschnitt zumindest bis in den Verbindungsabschnitt erstreckt. Die Einfüllöffnung erstreckt sich bis zur Aussenseite des Befestigungselementes, so dass beim Befüllen der Einfüllbohrung die aushärtbare Masse in den Zwischenraum zwischen dem Befestigungselement und der Wandung des Bohrlochs austreten kann. Vorteilhaft verläuft die Einfüllbohrung parallel zur Längsachse.

Bevorzugt erstreckt sich die Einfüllbohrung bis in den Verankerungsabschnitt. Besonders vorteilhaft erstreckt sich die Einfüllbohrung bis an das freie axiale Ende des Verankerungsabschnitts, so dass die Befüllung des Bohrlochs am bohrlochtiefsten Punkt des gesetzten Befestigungselementes erfolgt und somit die vollständige Verfüllung des Bohrlochs gewährleistet ist.

Vorzugsweise weist der Halteabschnitt ein Kupplungsmittel und der Verbindungsabschnitt ein entsprechend ausgebildetes Gegenkupplungsmittel auf. Mit einer zweiteiligen Ausbildung ist das Befestigungselement einfach und wirtschaftlich zu fertigen. In einer Variante sind auch der Verbindungsabschnitt und der Verankerungsabschnitt miteinander kuppelbar. Unterschiedlich ausgestaltete einzelne Elemente können beispielsweise entsprechend der örtlichen Gegebenheiten oder besonderen Anforderungen miteinander zu einem Befestigungselement zusammengestellt werden, das die gewünschten Erfordernisse vorteilhaft erfüllt.

Bevorzugt ist das Kupplungsmittel ein Innengewindeabschnitt und das Gegenkupplungsmittel ein Abschnitt mit einem Aussengewinde, so dass die beiden Teile einfach miteinander verschraubbar sind.

Das erfindungsgemässe Verfahren zum Setzen eines chemisch verankerten Befestigungselementes mit einem erfindungsgemässen Befestigungselement umfasst als ersten Schritt das Bohren eines Bohrlochs in einem Untergrund, in den das Befestigungselement verankert werden soll. Nach dem Bohrvorgang wird das Bohrloch mit geeigneten Massnahmen gereinigt. Anschliessend wird das Befestigungselement vorteilhaft schlagend in das Bohrloch eingetrieben, wobei die Wandung des Bohrlochs von dem gewindefurchenden Aussengewinde gefurcht wird. Der Bohrer zum Erstellen des Bohrlochs kann zur Ausbildung eines Setzwerkzeuges für das Befestigungselement neben der Bohrspitze radial nach aussen abragende Kanten aufweisen, die axiale Schläge von dem Werkzeuggerät auf das Befestigungselement übertragen. Dann erfolgt das Einbringen der aushärtbaren Masse in das Bohrloch, wobei aufsteigende, von aussen sichtbare aushärtbare Masse die vollständige Verfüllung des Bohrlochs dem Anwender anzeigt. Weist das Befestigungselement eine Einfüllbohrung auf, erfolgt die Befüllung des Bohrlochs vorteilhaft durch diese Einfüllöffnung.

Die Erfindung wird nachstehend anhand von Ausführungsbeispielen näher erläutert. Es zeigen:
- Fig. 1: Ein erstes Ausführungsbeispiel eines Befestigungselementes in Seitenansicht;
- Fig. 2: eine Detaildarstellung eines Gewindegangs des Aussengewindes am Halteabschnitt;
- Fig. 3: ein zweites Ausführungsbeispiel eines Befestigungselementes in Seitenansicht mit Teilschnitten; und
- Fig. 4a+b: ein erfindungsgemässes Setzverfahren in zwei Teilschritten.

Grundsätzlich sind in den Figuren gleiche Teile mit den gleichen Bezugszeichen versehen.

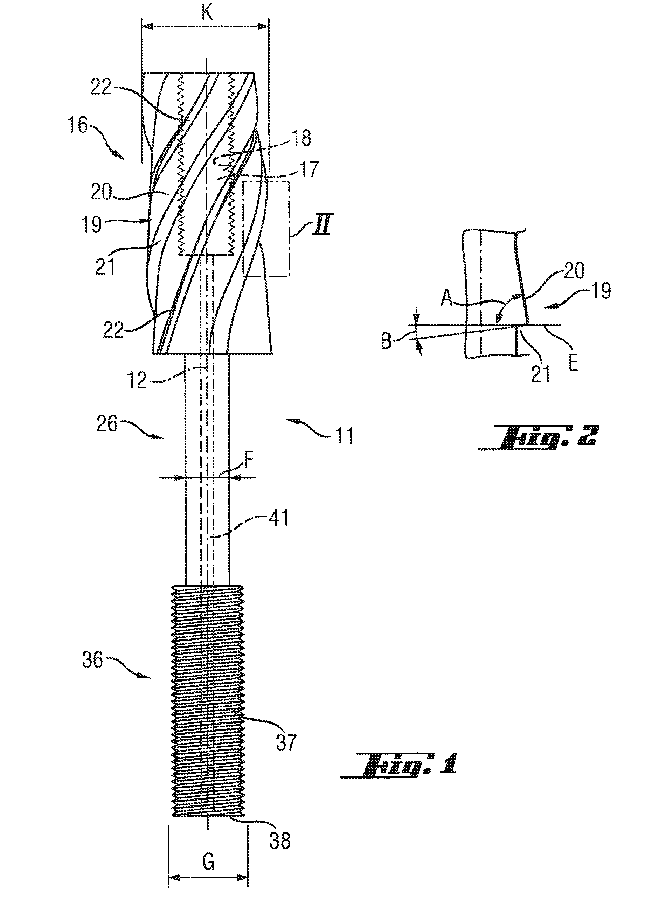

Das in den Figuren 1 und 2 dargestellte chemisch verankerbare Befestigungselement 11 erstreckt sich entlang einer Längsachse 12 und weist einen Halteabschnitt 16 zur Kontaktierung der Wandung eines Bohrlochs, einen an den Halteabschnitt 16 anschliessenden Verbindungsabschnitt 26 und einen an den Verbindungsabschnitt 26 anschliessenden Verankerungsabschnitt 36 auf.

Der Halteabschnitt 16 weist eine Sacklochbohrung 17 auf, welche als Lastangriffsmittel 18 mit einem Innengewinde versehen ist. Aussenseitig ist an dem Halteabschnitt 16 ein mehrgängiges, gewindefurchendes Aussengewinde 19 vorgesehen, dessen Steigung gegenüber der Längsachse 12 35° entspricht. Der Flankenwinkel A zu einer senkrecht zur Längsachse 12 des Befestigungselementes 11 stehenden Ebene E der dem freien Ende des Halteabschnitts 16 zugewandten Flanke 20 des Aussengewindes 19 entspricht 85°. Der Flankenwinkel B zu der senkrecht zur Längsachse 12 des Befestigungselementes 11 stehenden Ebene E der anderen, dem Verbindungsabschnitt 26 zugewandten Flanke 21 des Aussengewindes 19 entspricht 7°. Der Aussendurchmesser K des Halteabschnitts 16 ist derart gewählt, dass das Aussengewinde 19 beim Setzen des Befestigungselementes 11 die Wandung des Bohrlochs für eine mechanische Verankerung des Befestigungselementes 11 ausreichend furcht. Weiter sind an der Aussenseite des Halteabschnitts 16 zwei wendelförmig verlaufende Nuten als Steigkanäle 22 für die aushärtbare Masse vorgesehen.

Der an den Halteabschnitt 16 anschliessende Verbindungsabschnitt 26 weist einen kreisförmigen Querschnitt mit einem Aussendurchmesser F auf, der dem 0.4-fachen des Aussendurchmessers K des Halteabschnitts 16 entspricht.

Der an den Verbindungsabschnitt 26 anschliessende Verankerungsabschnitt 36 weist ebenfalls einen kreisförmigen Querschnitt mit einem Aussendurchmesser G auf. Der Aussendurchmesser G ist kleiner als der Aussendurchmesser K des Halteabschnitts 16 und entspricht maximal dem Nenndurchmesser des Bohrlochs, in welches das Befestigungselement 11 gesetzt wird. Umfangsseitig ist an dem Verbindungsabschnitt 26 eine Profilierung 37 in Form eines Gewindes vorgesehen.

Für die Befüllung des Bohrlochs nach dem Setzen des Befestigungselementes 11 erstreckt sich ausgehend von der Sacklochbohrung 17 des Halteabschnitts 16 durch den Halteabschnitt 16, den Verbindungsabschnitt 26 und den Verankerungsabschnitt 36 eine zur Längsachse 12 verlaufende Einfüllbohrung 41, die am freien Ende 38 des Verankerungsabschnitts 36 mündet.

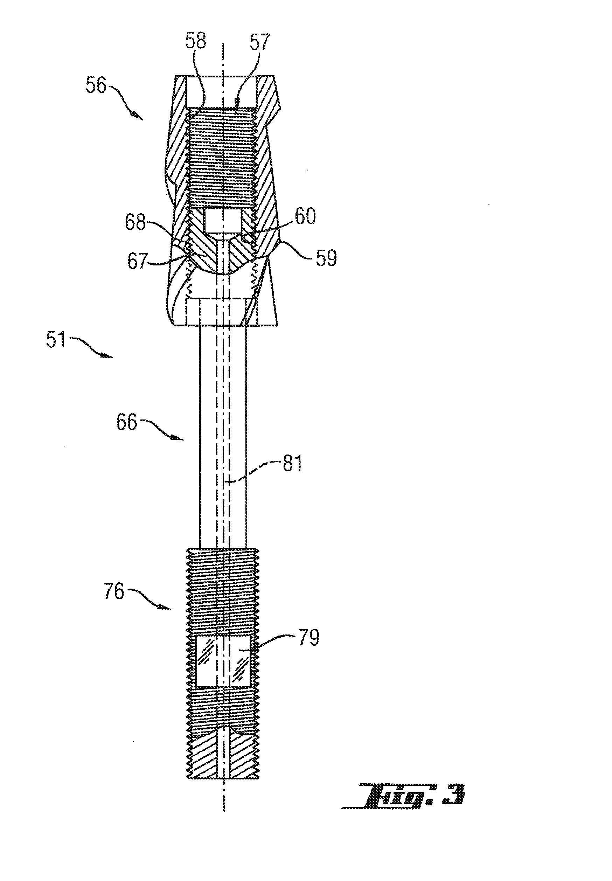

Das in der Figur 3 dargestellte Befestigungselement 51 ist im Gegensatz zu dem in den Figuren 1 und 2 dargestellten Befestigungselement 11 zweiteilig ausgebildet. Der Halteabschnitt 56 ist mit einer durchgängigen Bohrung 57 versehen, die bereichsweise mit einem Innengewinde als Lastangriffsmittel 58 und als Kupplungsmittel 60 versehen ist. Das gewindefurchende Aussengewinde 59 ist i.W. wie das Aussengewinde 19 des Halteabschnitts 16 des Befestigungselementes 11 ausgebildet.

Der Verbindungsabschnitt 66 weist an einem Ende einen Abschnitt 67 auf, der mit einem, in das Innengewinde des Halteabschnittes 56 einschraubbaren Aussengewinde als Gegenkupplungsmittel 68 versehen ist. Der am anderen Ende des Verbindungsabschnitts 66 ausgebildete Verankerungsabschnitt 76 weist Schlüsselflächen 79 für einen Angriff eines Werkzeugs auf, um die Montage und Demontage des mehrteiligen Befestigungselementes 51 zu vereinfachen.

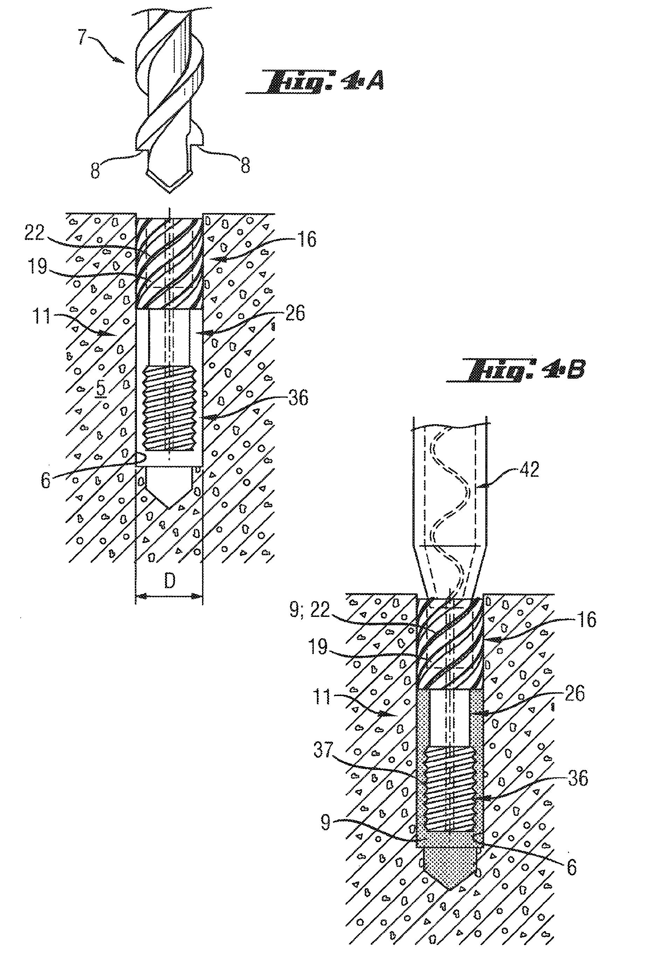

Nachfolgend wird anhand der Figuren 4a und 4b das erfindungsgemässe Verfahren zum Setzen des Befestigungselementes 11 dargelegt. Wie in Figur 4a gezeigt, wird mit einem Bohrer 7 zuerst ein Bohrloch 6 mit dem Nenndurchmesser D in den Untergrund 5 erstellt. Anschliessend wird das Befestigungselement 11 in das Bohrloch 6 mittels des Bohrers 7 als Eintreibwerkzeug eingetrieben. Der Bohrer 7 weist dazu zwei radial nach aussen abragende Schlagkanten 8 auf, die beim Setzen des Befestigungselementes 11 mit dem freien Ende des Halteabschnitts 16 in Anlage kommen und so die Schlagenergie von einem hier nicht dargestellten Werkzeug auf das Befestigungselement 11 übertragen. Beim Eintreiben des Befestigungselementes 11 furcht das Aussengewinde 19 am Halteabschnitt 16 die Wandung des Bohrlochs 6, womit das Befestigungselement 11 mechanisch verankert wird und sofort bis auf ein durch die mechanische Verankerung bestimmtes Lastniveau belastbar ist.

Wie in der Figur 4b dargestellt, wird über eine geeignete Befüllvorrichtung 42 eine aushärtbare Masse 9 durch die Einfüllbohrung 41 in das Bohrloch 6 eingebracht, bis diese in den Steigkanälen 22 am Halteabschnitt 16 aufsteigt und dem Anwender die vollständige Verfüllung des Bohrlochs 6 anzeigt. Nach dem Aushärten der aushärtbaren Masse 9 ist das Befestigungselement 11 voll belastbar.

## Patentansprüche

1. Chemisch verankerbares Befestigungselement, das sich entlang einer Längsachse (12) erstreckt, mit einem Halteabschnitt (16; 56) zur Kontaktierung einer Wandung eines Bohrlochs (6), wobei der Halteabschnitt (16; 56) ein Lastangriffsmittel (18; 58) aufweist,
mit einem an den Halteabschnitt (16; 56) anschliessenden Verbindungsabschnitt (26; 66), der kleinere radiale Abmessungen als der Halteabschnitt (16; 56) aufweist, und
mit einem an den Verbindungsabschnitt (26; 66) anschliessenden Verankerungsabschnitt (36; 76), der kleinere radiale Abmessungen als der Halteabschnitt (16; 56) aufweist,
mit einem gewindefurchenden Aussengewinde (19), das an dem Halteabschnitt (16; 56) vorgesehen ist,
**dadurch gekennzeichnet, dass**
die Steigung des Aussengewindes (19; 59) gegenüber der Längsachse (12) 30° bis 70° und der Flankenwinkel (A) zu einer senkrecht zur Längsachse (12) des Befestigungselementes (11) stehenden Ebene (E) der dem freien Ende des Halteabschnitts (16) zugewandten Flanke (20) des Aussengewindes (19; 59) 82° bis 88° und der Flankenwinkel (B) zu der senkrecht zur Längsachse (12) des Befestigungselementes (11) stehenden Ebene (E) der dem freien Ende des Halteabschnitts (16) abgewandten Flanke (21) des Aussengewindes (19; 59) 3° bis 10° entspricht.

2. Befestigungselement nach Anspruch 1, **dadurch gekennzeichnet, dass** das Aussengewinde (19; 59) mehrgängig ausgebildet ist.

3. Befestigungselement nach Anspruch 1 oder 2, **dadurch gekennzeichnet, dass** zumindest ein Steigkanal (22) für eine aushärtbare Masse (9) an dem Halteabschnitt (16) vorgesehen ist.

4. Befestigungselement nach einem der Ansprüche 1 bis 3, **dadurch gekennzeichnet, dass** das Befestigungselement (11; 51) eine zur Längsachse (12) verlaufende Einfüllbohrung (41; 81) für die aushärtbare Masse (9) zur Befüllung des Bohrlochs (6) aufweist, die sich ausgehend von dem Halteabschnitt (16; 56) zumindest bis in den Verbindungsabschnitt (26; 66) erstreckt.

5. Befestigungselement nach Anspruch 4, **dadurch gekennzeichnet, dass** sich die Einfüllbohrung (41; 81) bis in den Verankerungsabschnitt (36; 76) erstreckt.

6. Befestigungselement nach einem der Ansprüche 1 bis 5, **dadurch gekennzeichnet, dass** der Halteabschnitt (56) ein Kupplungsmittel (60) und der Verbindungsabschnitt (66) ein entsprechend ausgebildetes Gegenkupplungsmittel (68) aufweist.

7. Befestigungselement nach Anspruch 6, **dadurch gekennzeichnet, dass** das Kupplungsmittel (60) ein Innengewindeabschnitt und das Gegenkupplungsmittel (68) ein Abschnitt (67) mit einem Aussengewinde aufweist.

8. Verfahren zum Setzen eines chemisch verankerten Befestigungselementes (11) nach einem der Ansprüche 1 bis 7, umfassend die folgenden Schritte:
a) Bohren eines Bohrlochs (6) in einem Untergrund (5);
b) Reinigen des Bohrlochs (6);
c) Eintreiben des Befestigungselementes (11) in das Bohrloch (6);
d) Einbringen einer aushärtbaren Masse (9) in das Bohrloch (6).

## Claims

1. A chemically anchorable fastening element extending along a longitudinal axis (12), said element comprising:
a retaining portion (16; 56) for making contact with the wall of a drilled hole (6),
said retaining portion (16; 56) being provided with load application means (18; 58);
a connecting portion (26; 66) following on from the retaining portion (16; 56) and
having smaller radial dimensions than the retaining portion (16; 56); and
an anchoring portion (36; 76) following on from the connecting portion (26; 66) and
having smaller radial dimensions than the retaining portion (16; 56),
a self-tapping external thread (19) being provided on the retaining portion (16; 56),
**characterized in that**
the pitch of the external thread (19; 59) relative to the longitudinal axis (12) corresponds to 30° to 70°, and the angle (A) of the flank (20) of the external thread (19; 59) towards the free end of the retaining portion (16) relative to a plane (E), which extends perpendicular to the longitudinal axis (12) of the fastening element (11), corresponds to 82° to 88°, and the angle (B) of the flank (21) of the external thread (19; 59) away from the free end of the retaining portion (16) relative to the plane (E), which extends perpendicular to the longitudinal axis (12) of the fastening element (11), corresponds to 3° to 10°.

2. A fastening element according to Claim 1, **characterized in that** the external thread (19; 59) is formed as a multiple-start thread.

3. A fastening element according to Claim 1 or 2, **characterized in that** at least one uptake channel (22) for a hardenable substance (9) is provided on the retaining portion (16).

4. A fastening element according to one of Claims 1 to 3, **characterized in that** the fastening element (11; 51) has a filling hole (41; 81) extending along the longitudinal axis (12) from the retaining portion (16; 56) at least into the connecting portion (26; 66) for filling the drilled hole (6) with the hardenable substance (9).

5. A fastening element according to Claim 4, **characterized in that** the filling hole (41; 81) extends into the anchoring portion (36; 76).

6. A fastening element according to one of Claims 1 to 5, **characterized in that** the retaining portion (56) has coupling means (60) and the connecting portion (66) has correspondingly formed cooperating coupling means (68).

7. A fastening element according to Claim 6, **characterized in that** the coupling means (60) have a portion with an internal thread and the cooperating coupling means (68) have a portion (67) provided with an external thread.

8. A method of setting a chemically anchored fastening element (11) according to one of Claims 1 to 7, comprising the following steps:
a) Drilling a hole (6) in a substrate (5);
b) Cleaning the drilled hole (6);
c) Driving the fastening element (11) into the drilled hole (6);
d) Inserting a hardenable substance (9) into the drilled hole (6).

## Revendications

1. Elément de fixation ancrable chimiquement, s'étendant le long d'un axe longitudinal (12), comportant une partie de retenue (16 ; 56) pour venir en contact avec une paroi d'un trou de perçage (6), dans lequel la partie de retenue (16 56) comporte des moyens d'application de charge (18 ; 58),
une partie de liaison (26 ; 66) adjacente à la partie de retenue (16 ; 56), qui présente des dimensions radiales plus petites que la partie de retenue (16 ; 56), et
une partie d'ancrage (36 ; 76) adjacente à la partie de liaison (26 ; 66), qui présente des dimensions radiales plus petites que la partie de retenue (16 ; 56),
un filetage extérieur autotaraudeur (19) qui est prévu sur la partie de retenue (16 ; 56),
**caractérisé en ce que**
le pas du filetage extérieur (19 ; 59) par rapport à l'axe longitudinal (12) correspond à 30° à 70°, et le flanc (20) du filetage extérieur (19 ; 59) dirigé vers l'extrémité libre de la partie de retenue (16) présente un angle de flanc (A) vers un plan (E) s'étendant perpendiculairement à l'axe longitudinal (12) de l'élément de fixation (11) correspondant à 82° à 88°, et le flanc (21) du filetage extérieur (19 ; 59) opposé à l'extrémité libre de la partie de retenue (16) présente un angle de flanc (B) vers le plan (E) s'étendant perpendiculairement à l'axe longitudinal (12) de l'élément de fixation (11) correspondant à 3° à 10°.

2. Elément de fixation selon la revendication 1, **caractérisé en ce que** le filetage extérieur (19 ; 59) est formé de filets multiples.

3. Elément de fixation selon la revendication 1 ou 2, **caractérisé en ce qu'**au moins un canal montant (22) est prévu sur la partie de retenue (16) pour une masse durcissable (9).

4. Elément de fixation selon l'une quelconque des revendications 1 à 3, **caractérisé en ce que** l'élément de fixation (11 ; 51) comporte un alésage de remplissage (41 ; 81) s'étendant le long de l'axe longitudinal (12) pour la masse durcissable (9) pour remplir le trou de perçage (6), lequel alésage de remplissage s'étend en partant de la partie de retenue (16 ; 56) au moins jusque dans la partie de liaison (26 ; 66).

5. Elément de fixation selon la revendication 4, **caractérisé en ce que** l'alésage de remplissage (41 ; 81) s'étend jusque dans la partie d'ancrage (36 ; 76).

6. Elément de fixation selon l'une quelconque des revendications 1 à 5, **caractérisé en ce que** la partie de retenue (56) comporte des moyens de couplage (60) et la partie de liaison (66) comporte des moyens de couplage complémentaires (68) formés de manière correspondante.

7. Elément de fixation selon la revendication 6, **caractérisé en ce que** les moyens de couplage (60) présent une partie de filetage intérieur et les moyens de couplage complémentaires (68) présentent une partie (67) avec un filetage extérieur.

8. Procédé pour poser un élément de fixation ancrable chimiquement (11) selon l'une quelconque des revendications 1 à 7, comportant les étapes suivantes consistant à :
a) percer un trou de perçage (6) dans une surface sous-jacente (5),
b) nettoyer le trou de perçage (6),
c) enfoncer l'élément de fixation (11) dans le trou de perçage (6),
d) introduire une masse durcissable (9) dans le trou de perçage (6).
